(19) Europäisches Patentamt / European Patent Office / Office européen des brevets

(11) **EP 2 621 225 B1**

(12) **EUROPEAN PATENT SPECIFICATION**

(45) Date of publication and mention
of the grant of the patent:
**24.09.2014 Bulletin 2014/39**

(51) Int Cl.:
*H04W 52/36* (2009.01)     *H04W 36/00* (2009.01)

(21) Application number: **12153126.3**

(22) Date of filing: **30.01.2012**

(54) **Method, radio access point and computer program for performing a mobility decision for a user equipment**

Verfahren, Zugangspunkt und Computerprogramm zur Durchführung der Mobilitätsentscheidung für ein Benutzergerät

Procédé, point d'accès et programme d'ordinateur d'exécution de décision de mobilité pour un équipement utilisateur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.07.2013 Bulletin 2013/31**

(73) Proprietor: **ALCATEL LUCENT
92100 Boulogne-Billancourt (FR)**

(72) Inventors:
 • **Ratovelomanana, Frédéric
  78141 VELIZY (FR)**
 • **Toccaceli, Paolo
  78141 VELIZY (FR)**
 • **Charriere, Patrick
  78141 VELIZY (FR)**
 • **Yang, Yang
  78141 VELIZY (FR)**

(74) Representative: **Sciaux, Edmond
Alcatel-Lucent International
148/152 route de la Reine
92100 Boulogne-Billancourt (FR)**

(56) References cited:
**WO-A1-2009/123512     WO-A1-2010/121418**

 • **"LTE; Evolved Universal Terrestrial Radio Access (E-UTRA); Radio Resource Control (RRC); Protocol specification (3GPP TS 36.331 version 10.3.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V10.3.0, 1 November 2011 (2011-11-01), XP014068381,**

**Description**

The present invention relates to a method for performing mobility decision by a radio access point of a radio network communication system for a user equipment of said radio network communication system served by said radio access point.

It is known by the WO2009/123512 document methods for handling handover-related parameters in order to make handover decisions based on handover-related parameters. It is also known by the WO2010/121418 document a method for handover problem identification in a mobile telecommunications system, a mobile terminal, a radio base station and a management entity for the mobile telecommunication.

More generally a radio network communication system such as a wireless infrastructure can support communication for multiple wireless user equipments. Each user equipment communicates with one radio access point via transmissions in the downlink direction and in the uplink direction. The downlink refers to the radio communication link from the radio access point to the user equipment, and the uplink refers to the radio communication link from the user equipment to the radio access point.

Standards radio network communication system comprises multiple radio access points which are allocated in a geographical zone according to a network plan, so that all user equipments can establish a correct uplink radio link with a radio access point. However, feedbacks from field deployment highlight the fact that radio communications in the uplink direction between a user equipments and radio access point frequently failed despite of said network planning.

The object of the invention is therefore to overcome the drawback of the aforementioned radio network communication system.

To this end, there is provided a method for performing mobility decision according to claim 1. Further non-limitative embodiments are set forth in the dependant claims.

The method according to the invention allows measuring the uplink transmission radio power between a user equipment and a radio access point via the power headroom reported by the user equipment. Thus, thanks to said method, the risk of radio failure in the uplink direction can be pro-actively detected and therefore reduced.

There is also provided a radio access point according to claim 8, a radio network communication system according to claim 10, a computing program product for a computer according to claim 11.

Some embodiments of methods and/or apparatus in accordance with embodiments of the present invention are now described, by way of example only, and with reference to the accompanying drawings, in which:

- Figure 1 is a synoptic scheme of a method for performing mobility decision according to the invention, said method being implemented in a radio communication system according to the invention ;
- Figure 2 is a diagram illustrating some steps of the method of figure 1 ;
- Figure 3 and figure 4 represent a comparison between power headroom metric and data, said comparison being performed according to the method of figure 1.

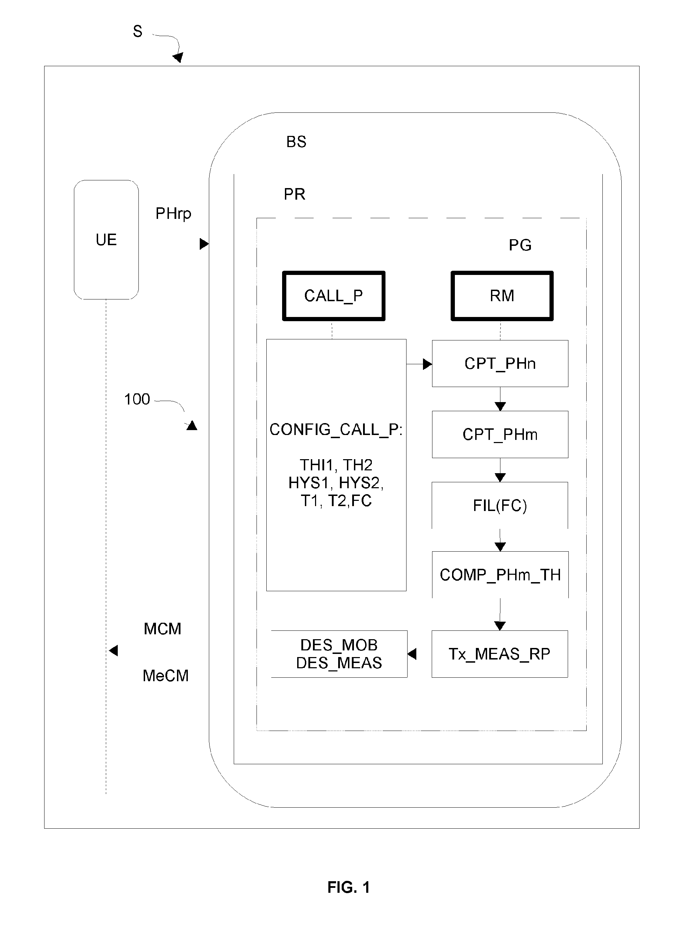

Fig. 1 illustrates a method 100 for performing mobility decision by a radio access point BS of a radio network communication system S for a user equipment UE of said radio network communication system S served by said radio access point BS, according to the invention, said method 100 being implemented in a radio communication network system S, which is in the example given a wireless infrastructure. In a non-limitative example, the wireless network is an LTE "Long Term Evolution" network and the radio access point BS is a base station also called eNodeB. This non-limitative example will be taken for the rest of the description.

As illustrated in Fig. 1, the wireless infrastructure S comprises:

- at least one base station BS ; and
- at least one user equipment UE which is adapted to cooperate with said base station BS.

The base station BS, as well-known by the man skilled in the art comprises at the Control Plane, three main layers which are:

- a layer L1, also called physical layer, which encodes transport channels data to physical channels;
- a layer L2, comprising in particular the RLC "Radio Link Control" and MAC "Medium Access Control" sub- layers, which passes data from the sub-layer RLC to the sub-layer MAC as logical channels and which formats and sends the logical channels as transport channel;
- a layer L3, also called RRC "Radio Resource Control" layer, which makes handover decisions, broadcast system information, control UE measurement reporting, set-up radio bearers etc.

The base station BS comprises a call processing layer CALL_P and a radio modem layer RM.

The physical layer of the base station BS comprises said radio modem layer RM.

In the example of LTE network, part of the functions of the call processing layer CALL_P are performed by the RRC layer of the base station BS. Thus, said RRC comprises at least part of said call processing layer CALL_P. The call processing layer Call_P supports in particular the following functions:

- cell set-up: common and shared channels setup (physical channels; transport channels; control logical channels);
- system information broadcast;
- configuration of the interfaces with the mobility management entity of the core network;
- configuration of the interfaces with other base stations in the radio access network in order to communicate directly with these base stations (peer-to-peer communication);
- call handling: radio connection establishment, reconfiguration and release, call context setup, modification and release etc;
- mobility handling for said user equipment: mobility from and to other base-station supporting same or other radio access technology direct or via a mobility management entity.

In a non-limitative embodiment, the radio modem layer RM supports in particular the following functions:

- modulation of an analogue radio carrier signal to encode digital information;
- demodulation of such a radio carrier signal to decode the transmitted information;
- production of a radio signal that can be transmitted easily and decoded to reproduce the original digital data.

The method 100 for performing mobility decision by a radio access point BS of a radio network communication system S for a user equipment UE of said radio network communication system S served by said radio access point BS is described in details below.

As will be described hereinafter, the user equipment UE conveys a power headroom report PHrp to the base station BS also called eNodeB. Said base station BS processes the power headroom report PHrp for its radio resource management purposes. Especially, the base station BS derived a metric from the power headroom report PHrp that the call processing layer CALL_P could use to perform a mobility decision and therefore to trigger a handover. This trigger is thus based on uplink considerations. Said metric expresses how close the user equipment UE is to exhaust the available transmit power of the user equipment UE, taking into account the Quality of Service (QoS) commitments (i.e., the Guaranteed Bit Rate). In a non-limitative embodiment, said transmit power is inferior or equal to 200mW. A power limit value is imposed by the Long Term Evolution technology LTE or by Universal Mobile Telecommunications System technology UMTS.

The metric is filtered (i.e. averaged) and thresholds with hysteresis values and timers are applied to determine the conditions of the user equipment UE. Changes in the condition of the user equipment UE are notified to the call processing layer CALL_P to be used as mobility decisions and therefore as triggers for the handover.

It is to be noted that the user equipment UE keeps monitoring its transmit power.

In the following description, in the non-limitative embodiment, the method for handover trigger comprises the further step above-mentioned.

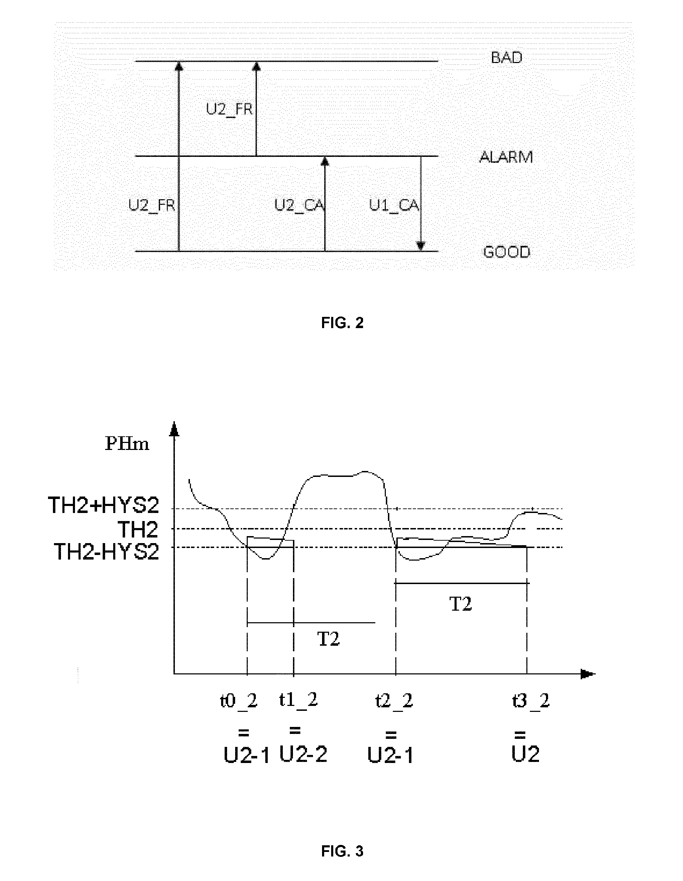

Reference to Fig. 2, 3 and Fig. 4 will be made.

It is to be noted that in an initial step illustrated CONFIG_CALLP, at the call processing layer CALL_P of the base station BS, one configures:

○ the first threshold TH2 and a second threshold TH1;
○ the first value HYS2 and a second value HYS1, said values being also called hysteresis values;
○ the first timer T2 and a second timer T1;
○ a filter coefficient FC.

In a non-limitative embodiment the data are initialized with the following values:

TH1 = 25.5dB
TH2= 6dB
HYS1 = 3dB
HYS2 = 3dB
T1 = 2560ms
T2 = 2560ms
FC = 4 and sampling period = 200ms or FC = 8 and sampling period = 40ms. It could be noted that the same value shall be used for the mobility from macro-cell to macro-cell and the mobility from macro-cell to small-cell.

Furthermore, it can be noted that the transmit power of the user equipment UE can be in a non-limitative embodiment between -40dBm and +23dBm (+/- 2dB) as specified in the 3GPP standard TS 36.101 (sections 6.2.1 - minimum output power and 6.3.2 - maximum output power). And timers T1, T2 can be between 0 ms to 5120 ms.

It is to be noted that the examples given are non-limitative and these values of TH1, TH2, HYS1, HYS2, T1 and T2 are configured by the operator in the eNodeB. In order to set-up the values of these parameters the operator can use the following means: calculations or simulations performed during or after the network planning or observations that are performed on deployed networks during the network monitoring.

**In a first step)** illustrated CPT_PHn, a normalized user equipment maximum transmit power PHn is computed from a power headroom reported PHrp by said user equipment UE.

In a non-limitative embodiment, said step is performed at said radio modem layer RM of said radio access point BS.

It is to be noted that the power limit of the user equipment UE is factored in

the power headroom reported PHrp by the user equipment UE.

The power headroom reported is sent by the user equipment to the base station BS which indicates how much power the user equipment is left with to start using full power. In other words, the power headroom reported PHrp is equal to the maximum user equipment UE transmit power minus the UE transmitting power. The UE transmitting power is also called "PUSCH transmit power" and referenced as the $P_{PUSCH}$. The $P_{PUSCH}$ being well-known by the man skilled in the art, it won't be described here.

Hence, PHrp = Pmax- $P_{PUSCH}$ (dBm).

More details on the power headroom reported may be found in the document 3GPP TS36.321 section 5.4.6.

For example if the power limit of the user equipment UE is 200mW and the transmitting power of the user equipment UE, say 100mW, the power headroom reported PHrp is equal to 200mW/100mW = 2mW $\rightarrow$ +3dB.

It is to be noted that it is possible to calculate the power headroom reported PHrp in log domain. For example 100mW corresponds to +20dBm, 200mW corresponds to +23dBm, so the power headroom reported PHrp is equals to 23-20 = +3dB.

It is to be noted that as the user equipment UE conveys the power headroom reported PHrp to the base station BS (and more particularly to the uplink scheduler of said base station BS), the radio modem layer RM of the base station BS receives said power headroom reported PHrp.

• Computation of PHn

The normalized user equipment maximum transmit power PHn is also called power headroom normalized. It is defined by the following equation:

$$PHn(UE_k) = PHrp(UE_k) + \Delta_{TF} + 10\log_{10}(M)$$

wherein:

-  $\Delta_{TF}$ is a predicted power control offset associated with a selected modulation coding scheme MCS,
-  M is the number of allocated granted physical resource blocks PRB for PUSCH transmission on which the Power Headroom report was received, and
-  PHrp is the power headroom reported. As described before, the power headroom reported PHrp is calculated by the user equipment UE as the difference (when expressing everything in dB) between the maximum transmission power and the power used to send the block of data (which contain the power headroom report itself).

We can note that, M is the number of granted physical resource blocks PRB for PUSCH transmission on which the Power Headroom report PHrp was received.

It is to be reminded that the PUSCH is a Physical Uplink Shared Channel. The PUSCH provides the means for the data transfer between UE and the BS. The BS assigns PUSCH resources to the UE by sending an uplink grant (over the PDCCH, Physical Downlink Control Channel) that tells the UE which PUSCH PRBs(Physical Resource Blocks) it can use and in which TTI (4 ms after receiving the uplink grant), which MCS (Modulation and Coding Scheme) to use etc. When the UE performs the transmission over PUSCH (4 ms after the grant), it may include a Power Headroom report PHrp. Moreover, N is a number of physical resource blocks PRB granted to sustain a guaranteed bit rate GBR throughput, in others words, N is the number of physical resource blocks PRB that the modem radio layer RM determines that need to be transmitted if we are to meet the GRBaggregate.

So the Power Headroom reported PHrp is covert by the user equipment UE for a transmission over M physical resource blocks PRB to the Power Headroom that we would see for a transmission on N physical resource blocks PRBs. So we multiply it by M (+log(M) in the log domain) and divide it by N (-log(N)).

By multiplying by M, we basically obtain the power headroom PH that we would have had, if the transmission had been on just 1 PRB (using the same power per PRB). We call this the power headroom normalized PHn.

Then we want to know the PH if the transmission (assuming the power per PRB remains the same) is to use N physical resource blocks PRB. The power headroom PH would become N times smaller. If the PH gets close to 1 (0 in dB), then it means that the user equipment UE would get close to the maximum transmission power. When that happens, it may make sense to start considering moving to another cell.

**In a second step)** illustrated CPT_PHm, a power headroom metric PHm is computed which is equal to said normalized user equipment maximum transmit power PHn minus a power headroom required PHre by said user equipment UE, said power headroom required PHre being the power required for the user equipment UE to sustain a guaranteed bit rate throughput.

In a non-limitative embodiment, said step is performed at said radio modem layer RM of said radio access point BS.

It is to be noted that the power headroom metric is also called power margin. Hence, PHm=PHn-PHre.

• Computation of PHre

The power headroom required PHre is the power required for the user equipment UE to sustain a guaranteed bit rate throughput. In a non-limitative embodiment, it is computed by the uplink scheduler of the base station BS.

The power headroom required PHre is defined by the following equation:

$$PHre = 10\log_{10}(N) + \Delta_{TF}$$

wherein:

- N is a number of physical resource blocks PRB granted to sustain a guaranteed bit rate GBR throughput, and
- $\Delta_{TF}$ is a predicted power control offset associated with a selected modulation coding scheme MCS.

More particularly the number of physical resource blocks N is obtained by the following equation:

$$N = ceil\left(\frac{AssumedGrantSize}{r_k^{WB} * K}\right)$$

wherein

- Ceil (or ceiling) is the smallest integer N such that N is greater than or equal to X, a defined value.
- $r_k^{WB}$ is the wide-band spectral efficiency of the user equipment U E, and
- K is a conversion factor to convert the wide-band spectral efficiency from bit/second/Hz to byte/1ms/PRB, in a non-limitative example, K is equal to 22.5.
  with

$$r_k^{WB} = SE\_LUT\big(Est\_SINR(k) + SECorr(k)\big)$$

wherein:

- The spectral efficiency $r_k^{WB}$ is a measure of how much throughput (expressed, say, in bits per second) can be carried by a unit of bandwidth (expressed, say, in Hz). It is a function of the Signal to Noise and Interference Ratio SINR.
- SE_Corr(k) is a correction that is applied to the user equipment UEk because the relationship between the spectral efficiency $r_k^{WB}$ and the Signal to Noise and Interference Ratio SINR is affected in practice by the quality of implementation of the user equipment receivers and decoders. The correction SE_Corr(k) provides a link adaptation correction that captures the dependency of spectral efficiency on factors other than SINR, such as in non-limitative examples the user equipment UE speed (Doppler), the imperfections in the transmitter or in the receiver etc.
- Est_SINR(k) is the estimated Signal to Noise and Interference Ratio SINR.

Since the Signal to Noise and Interference Ratio SINR could vary from subcarrier to subcarrier, one considers an average across the entire set of subcarriers (the entire bandwidth), i.e. a wide-band SINR.

SE_LUT is a look-up table which enables to calculate the estimated Signal to Noise and Interference Ratio SINR. It is to be noted that The SE_LUT table can be filled either by performing simulations of the LTE downlink communication path (encoding, modulation, transmission, channel, reception, demodulation, decoding) at different SINR levels or by carrying out tests on real equipment (real BS, real UEs) and then choosing representative values.

Therefore, the radio modem layer RM send wkB of data in xms (a subframe, the smallest unit of time that can be allocated by the radio modem layer RM) to a user equipment UE whose estimate the Signal to Noise and Interference Ratio SINR is +ydB. The radio modem layer RM looks up the +ydB entry in the lookup table and obtains zbps/Hz. In this non-limitative embodiment, the radio modem layer RM can apply this formula:

$$N = ceil\left(\frac{AssumedGrantSize}{r_k^{WB} * K}\right)$$

It can be noted that the Signal to Noise and Interference Ratio SINR varies from one subcarrier to another.

with AssumedGrantSize = GbrGrantFactor * GBR$_{aggregate}$. where :

- GBR$_{aggregate}$ is the sum of guaranteed bit rate GBR for the given user equipment UE. It is to be noted that there may be multiple GBR bearers to the same user equipment UE, a bearer being a carrier of data with a Guaranteed Bit Rate. Therefore, the sum of GBR means the sum of the Guaranteed Bit Rates of the GBR bearers to that user equipment UE.
- GbrGrantFactor is a static configurable parameter that relates to the average interval between two successive grants, with a grant being the number of physical resource blocks PRB used for communication between the user equipment UE and the base station BS.

In a non-limitative example, if we set it to 1.5 Transmission Time Interval (TTI, one TTI being equal to 1 ms and being the unit of time for a grant), we're basically assuming that we are granting as fast as possible (taking into account hybrid automatic repeat request HARQ). This corresponds to a pure coverage limit.

It is to be noted that the coverage (how far from the cell centre we can maintain the call) is limited by the available transmission power limit at user equipment UE (constrained by the standards to 200mW). So, we can reach the largest coverage if we can keep the grants small, which means that we have to grant as often as possible. So if we set GbrGrantFactor to a value that corresponds to a grant interval of 1.5 TTI, we are going to detect that the transmission power is becoming insufficient for the GBR aggregate, only when we are really approaching the coverage limit.

But in practice, it is risky to assume that we can grant a user equipment UE at every TTI, as there is contention with other user equipments UE. So the GbrGrantFactor has to be increased, reflecting the fact that the grant interval is going to be larger.

As we can see, the larger the number N of physical resource blocks is, the larger the power headroom required is.

In a non-limitative embodiment, after said computation of the power headroom metric PHm, one filters with said filter coefficient FC the power headroom metric PHm computed. It permits filtering the noise of the power headroom metric computed.

In a non-limitative embodiment, the filtering is performed according to following equation:

$$F_n = (1-a) \cdot F_{n-1} + a \cdot M_n$$

wherein:

- a = 1/2^(k/4), where k is the filter coefficient FC,
- Mn is equal to the power headroom metric PHm computed from the radio modem layer RM, and
- Fn is the updated filtered measurement result, that is used for measurement report MEAS_RP;
- Fn-1 is the old filtered measurement result, where F0 is set to M1 when the first measurement result from the radio modem layer RM is received.

It is to be noted that the base station BS must adapt the filter such that the time characteristics of the filter are preserved at different input rates, observing the filter coefficient FC depends on sample rate that is equal for example to 200 ms. If FC is set to 0, no filtering is applicable. The filtering is performed in the same domain as used for evaluation of reporting criteria or for said PHm measurement reporting, i.e., logarithmic filtering for logarithmic measurements. The filter input rate is implementation dependent. The radio modem layer shall filter said PHm measurements using at least 2 measurements. Within the set of measurements used for the filtering, at least two measurements shall be spaced by at least the sampling period, called T_MEAS_PHM in the 3GPP TS 36.331 and 3GPP TS 36.133 standards.

**In a third step)** illustrated COMP_PHm_TH, one compares said power headroom metric PHm with a first threshold TH2 and with a first value HYS2.

In a non-limitative embodiment, said step is performed at said radio modem layer RM of said radio access point BS.

• TH2, HYS2

The comparison is explained herein under with reference to figures 2 and 3.

Figure 3 illustrates the comparison of the power headroom metric PHm computed with the first threshold TH2 according to a hysteresis cycle using the first hysteresis value HYS2. More particularly, figure 3 depicts a low power headroom metric PHm.

As will be described hereinafter and illustrated in figure 3, in a first non-limitative embodiment, a first event U2 is used to trigger the sending of measurement report. The threshold TH2 and the hysteresis value HYS2 are parameters used to determine an entry condition U2-1 and a leave condition U2-2 of the first event U2, and therefore are used to trigger said first event U2, said triggering leading to the sending of the measurement report.

It is to be noted that the entry condition U2-1 and a leave condition U2-2 may be implemented as flags.

In a second non-limitative embodiment as illustrated in figure 2, a bad position BAD applied to the uplink radio link (user equipment to base station) is used to trigger the sending of a measurement report. The threshold TH2 and the hysteresis value HYS2 are parameters used to determine a first coverage alarm event U1_CA, a second floor event U2_FR, a second coverage alarm event U2_CA, and therefore are used to trigger the bad position BAD.

Two other positions, a good position GOOD and an alarm position ALARM are also applied to the uplink radio link according to the first coverage alarm event U1_CA, second floor event U2_FR, a second coverage alarm event U2_CA. Hence, when PHm < TH2-HYS2, the timer T2 is triggered, U2_CA is triggered and the alarm position ALARM is applied. If before the expiration of the timer T2, PHm > TH2+HYS2, U1_CA is triggered and the good position GOOD is applied. If during the elapse time of the timer T2 and after the expiration of the timer T2, PHm < TH2+HYS2, U2_FR is triggered and the bad position BAD is applied.

It is to be noted that the first coverage alarm event U1_CA, the second floor event U2_FR, and the second coverage alarm event U2_CA may be implemented as flags.

Both embodiments may be used in combination. In this case, after the reception of the event U2, the uplink radio link returns to a good position GOOD as illustrated in Fig. 2.

The following example will illustrate these two embodiments.

- At time t0_2: the power headroom metric PHm is below said first threshold TH2 minus said first hysteresis value HYS2 (PHm < TH2-HYS2). This triggers the timer T2. T2 starts.

Thus, the second inequality entering condition U2-1 is fulfilled and an entering condition for a second event U2 is therefore satisfied. The second inequality entering condition U2-1 indicates that the power headroom metric computed PHm is inferior to a granted minimum power headroom metric (i.e. TH2-HYS2).

The uplink radio link is considered as being to an alarm position ALARM. The second coverage alarm event U2_CA is triggered. In this alarm position ALARM, the first coverage alarm event U1_CA and the second floor event U2_FR are configured (that means they can be triggered), as illustrated in Fig. 2. That is to say the uplink radio link can move to a good position GOOD or to a bad position BAD.

It is to be noted that in a non-limitative embodiment, when entering the ALARM radio state, the Call_P sets-up inter-frequency and/or inter-RAT (Radio Aces Technology) measurements in order to determine a target cell or frequency towards which the user equipment can be handed over. When leaving the ALARM radio state, the Call_P removes inter-frequency and/or inter-RAT (Radio Aces Technology) measurements in order to determine a target cell or frequency towards which the user equipment could be handed over.

- At time t1_2: the power headroom metric PHm is above said first threshold TH2 plus said first hysteresis value HYS2 ((PHm > TH2+HYS2). The timer T2 stopped.

Thus, a second inequality leaving condition U2-2 is fulfilled and a leaving condition for a second event U2 is therefore satisfied.

However, as said power headroom metric PHm is above said first hysteresis value HYS2 plus said first threshold TH2, the uplink radio link is still considered as being to an alarm position ALARM. In this alarm position ALARM, the second coverage alarm event U2_CA is still triggered and the first coverage alarm event U1_CA and the second floor event U2_FR are kept being configured (that means they can be triggered), as illustrated in Fig. 2. That is to say the uplink radio link can move to a good position GOOD or to a bad position BAD.

- at time t2_2: the power headroom metric PHm is below said first threshold TH2 minus said first hysteresis value HYS2 (PHm < TH2-HYS2). The entering condition for second event U2 is again satisfied as at time t0_2. The uplink radio link is in the alarm position ALARM.

- at time t3_2: Timer T2 expires.
  During the duration of the first timer T2, the power headroom metric PHm has remained under said first hysteresis value HYS2 plus said first threshold TH2 (PHm < TH2+HYS2) and after the timer T2 has expired.
  The second inequality entering condition U2_1 has been verified but the second inequality leaving condition U2_2 has not been verified during the timer T2 configured for the first event U2.
  The first event U2 is triggered as illustrated in Fig. 3.
  The uplink radio link was in alarm position ALARM, it switches to a bad position BAD and after the reception of event U2, the uplink radio link moves to a good position GOOD.

After this comparison, once the second inequality entering condition U2_1 is verified and the second inequality leaving condition U2_2 is not verified during the timer T2 configured for the first event U2, a measurement report MEAS_RP is emitted and transmitted by the radio modem layer RM of the base station BS as explained in the next step described below.

• TH1, HYS1

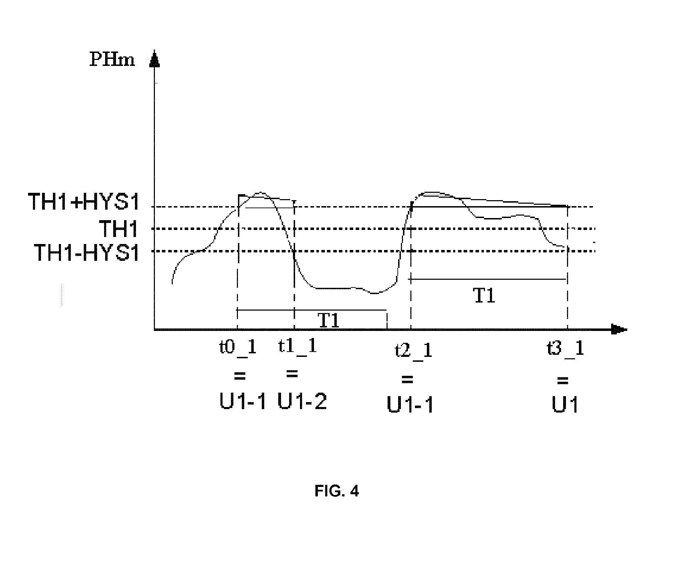

In a non-limitative embodiment, a similar comparison of said power headroom metric PHm with a second threshold TH1 and with a second value HYS1 is applied.
The comparison is explained herein under with reference to figures 2 and 4.
Figure 4 illustrates the comparison of the power headroom metric PHm computed with the second threshold TH1 according to the hysteresis cycle using the second hysteresis value HYS1. More particularly, Figure 4 depicts a large power headroom metric PHm.

As will be described hereinafter, as illustrated in figure 4, in a first non-limitative embodiment, a second event U1 is used to trigger the sending of measurement report. The threshold TH1 and the hysteresis value HYS1 are parameters used to determine an entry condition U1-1 and a leave condition U1-2 of the second event U1, and therefore are used to trigger said second event U1, said triggering leading to the sending of the measurement report.
It is to be noted that the entry condition U1-1 and a leave condition U1-2 may be implemented as flags.

In a second non-limitative embodiment as illustrated in figure 1, a bad position BAD applied to the uplink radio link (user equipment to base station) is used to trigger the sending of a measurement report. The threshold TH1 and the hysteresis value HYS1 are parameters used to determine a first coverage alarm event U1_CA, a second floor event U2_FR, a second coverage alarm event U2_CA, and therefore are used to trigger the bad position BAD.
Two other positions, a good position GOOD and an alarm position ALARM are also applied to the uplink radio link according to the first coverage alarm event U1_CA, second floor event U2_FR, a second coverage alarm event U2_CA.
Hence, when PHm > TH1+HYS1, the timer T1 is triggered, U2_CA is triggered and the alarm position ALARM is applied.
If before the expiration of the timer T1, PHm < TH1-HYS1, U1_CA is triggered and the good position GOOD is applied.
If during the elapse time of the timer T1 and after the expiration of the timer T1, PHm > TH1-HYS1, U2_FR is triggered and the bad position BAD is applied.
It is to be noted that the first coverage alarm event U1_CA, the second floor event U2_FR, and the second coverage alarm event U2_CA may be implemented as flags.

Both embodiments may be used in combination. In this case, after the reception of the event U1, the uplink radio link returns to a good position GOOD as illustrated in Fig. 2.

The comparison is explained herein under with reference to figures 2 and 4. As described below:

- At time t0_1: Said power headroom metric PHm is above the second threshold TH1 plus said second hysteresis value HYS1 (PHm > TH1+HYS1). This triggers the timer T1. T1 starts.
  Thus, a first inequality entering condition U1-1 is fulfilled and an entering condition for a first event U1 is therefore satisfied. The first inequality entering condition U1-1 indicates that the power headroom metric PHm computed is superior to a granted maximum power headroom metric (i.e. TH1+HYS1).
The uplink radio link is considered as being to an alarm position ALARM. The second coverage alarm event U2_CA is triggered. In this alarm position ALARM, the first coverage alarm event U1_CA and the second floor event U2_FR are configured (that means they can be triggered), as illustrated in
Fig. 2. That is to say the uplink radio link can move to a good position GOOD or to a bad position BAD.

- At time t1_1: the power headroom metric PHm is below said second threshold TH1 minus said second hysteresis value HYS1 (PHm < TH1-HYS1). The timer T1 is stopped.
  However, as said power headroom metric PHm is below said second hysteresis value HYS1 minus said second threshold TH1, the power headroom metric becomes too small to trigger event U1.
  Thus, a first inequality leaving condition U1-2 is fulfilled and a leaving condition for a first event U1 is therefore satisfied. The uplink radio link remains in the alarm position ALARM. In this alarm position ALARM, the second coverage alarm event U2_CA is still triggered and the first coverage alarm event U1_CA and the second floor event U2_FR keep being configured (that means they can be triggered), as illustrated in Fig. 2. That is to say the uplink radio link can move to a good position GOOD or to a bad position BAD.

It is to be noted that in a non-limitative embodiment, when entering the ALARM radio state, the Call_P sets-up inter-frequency and/or inter-RAT (Radio Access Technology) measurements in order to determine a target cell or frequency towards which the user equipment can be handed over. When leaving the ALARM radio state, the Call_P removes inter-frequency and/or inter-RAT (Radio Aces Technology) measurements in order to determine a target cell or frequency towards which the user equipment could be handed over.

- At time t2_1: the power headroom metric PHm is above said second threshold TH1 plus said second hysteresis value HYS1 (PHm > TH1+HYS1). The entering condition for first event U1 is again satisfied as at time t0_1. The uplink radio link remains in the alarm position ALARM.

- At time t3_1: Timer T1 expires.

During the duration of the second timer T1 the power headroom metric PHm remains above the second threshold TH1 minus second hysteresis value HYS1 and after timer T1 has expired.
The first inequality entering condition U1-1 has been verified but the first inequality leaving condition U1_2 has not been verified during the timer T1 configured for the first event U1.
The second event U1 is therefore triggered as illustrated in Fig. 4. The uplink radio link was in alarm position ALARM, it switches to a bad position BAD and after the reception of event U1, the uplink radio link transits to a good position GOOD as illustrated in Fig. 2.
After this comparison, for the second event U1, once the first inequality entering condition U1-1 has been verified and the first inequality leaving condition U1_2 is not verified during the second timer T1, a measurement report MEAS_RP is emitted and transmitted by the radio modem layer RM of the base station BS as explained in the next step described below.
**In a fourth step),** a measurement report MEAS_RP is emitted if said power headroom metric PHm has remained inferior to said first threshold TH2 plus said first value HYS2 during the whole duration of a timer T2, said timer T2 being triggered when said power headroom metric PHm has become inferior to said first threshold TH2 minus said first value HYS2.
In a non-limitative embodiment, said measurement report MEAS_RP is transmitted from said radio modem layer RM to said call processing layer CALL_P of said base station BS.
The measurement report MEAS_RP permits to transfer measurement results from the radio modem layer RM to the call processing layer CALL_P. Said measurement results may comprise the computed power margin PHm.
More particularly, in the case of Fig. 3, the measurement report MEAS_RP is emitted and then transmitted when said second inequality entering condition U2-1 (i.e. in the example at t0_2 or t2_2 of Fig. 3) corresponding to the power headroom metric PHm inferior to the first threshold TH2 minus the first hysteresis value HYS2 is verified and said second inequality leaving condition U2-2 (i.e. in the example at t3_2 of Fig. 3) corresponding to the power headroom metric PHm superior to the first threshold TH2 plus the first hysteresis value HYS2 is not verified during the first timer T2. This case applied when the power headroom metric is not sufficient to permit a reliable communication between a user equipment and a base station, a measurement report is emitted.
More particularly, in the non-limitative embodiment of Fig. 4, when said power headroom metric PHm has remained superior to a second threshold TH1 minus a second value HYS1 during the whole duration of a timer T1, said timer being triggered when said power headroom metric PHm has become superior to said second threshold TH1 plus said second value HYS1, a measurement report MEAS_RP is emitted and transmitted by the radio modem layer RM of the base station BS as explained in the step described below.

Hence, the measurement report MEAS_RP is transmitted when said first inequality entering condition U1-1 (i.e. in the example at t0_1 or t2_1 of Fig. 3) corresponding to the power headroom metric PHm superior to the second threshold TH1 plus the second hysteresis value HYS1 is verified and as long as said first inequality leaving condition U1-2 (i.e. in the example at t3_1 of Fig. 3) corresponding to the power headroom metric PHm inferior to the second threshold TH1 minus the second hysteresis value HYS1 is not verified during the second timer T1.

This case applied when the power headroom metric is too important so that it is not necessary to use this uplink radio link for the communication between the user equipment and the base station, a measurement report is emitted.

In a fifth step), based on said measurement report MEAS_RP a decision for mobility DES_MOB is performed for said user equipment UE. In a non-limitative embodiment, said step is performed at said call processing layer CALL_P.

Hence, one performs a decision:

- for mobility DES_MOB of said user equipment UE when the second floor event U2_FR is triggered.
  This decision for mobility DES_MOB indicates to the user equipment UE that it must release the radio uplink in use and attached to another radio uplink. Indeed, if the power headroom metric PHm is too small, there is a risk of connection failure. The power headroom metric described before is therefore not sufficient to secure the connection
- for mobility measurement configuration DES_MEAS of said user equipment UE when the second coverage alarm event U2_CA is triggered.

In a non-limitative embodiment, at the call processing layer CALL_P:

- from said decision for mobility DES_MOB, one transmits, to said user equipment UE, a mobility control message MCM comprising an information element for mobility of said user equipment UE,
- from said decision for measurement DES_MEAS, one transmits, to said user equipment UE, a measurement control message MeCM comprising an information element for measurement of said user equipment UE.

Said information element is relative to another base station, for example, a radio container prepared by the target cell BS in case of inter-BS handover. In a non-limitative embodiment, said information element is defined according to the standards set up by the 3GPP.

Hence, the method for performing mobility decision permits future allocation of the radio uplinks offered by the wireless infrastructure S while avoiding a connection failure.

As described above, the method for performing mobility decision above described is carried out by the base station BS of a radio network communication system S, said base station BS is adapted for performing mobility decision for a user equipment UE of said radio network communication system S served by said base station BS. Said base station BS, as illustrated in figure 1, comprises a unit processor PR adapted to:

- compute a normalized user equipment maximum transmit power PHn from a power headroom reported PHrp by said user equipment UE;
- compute a power headroom metric PHm which is equal to said normalized user equipment maximum transmit power PHn minus a power headroom required PHre by said user equipment UE, said power headroom required PHre being the power required for the user equipment UE to sustain a guaranteed bit rate throughput ;
- compare said power headroom metric PHm with a first threshold TH2 and with a first value HYS2 ;
- emit a measurement report MEAS_RP if said power headroom metric PHm has remained inferior to said first threshold TH2 plus said first value HYS2 during the whole duration of a timer T2, said timer being triggered when said power headroom metric PHm has become inferior to said first threshold TH2 minus said first value HYS2 ;
- based on said measurement report MEAS_RP, perform a decision for mobility DES_MOB for said user equipment UE.

The unit processor PR is further adapted based on the measurement report MEAS_RP to make a decision:

- for mobility DES_MOB of said user equipment UE when a second floor event U2_FR is configured;
- for mobility measurement configuration DES_MEAS of said user equipment UE, when a second coverage alarm event U2_CA is configured.

In a non-limitative embodiment, said step is performed at the call processing layer CALL_P.

The unit processor PR is further adapted:

- based on the measurement report MEAS_RP comprising said decision for mobility DES_MOB, to transmit to said user equipment UE a mobility control message MCM that mobility control message MCM comprising an information element for mobility of said user equipment UE,

- based on the measurement report MEAS_RP comprising said decision for measurement DES_MEAS, to transmit to said user equipment UE a measurement control message MeCM that measurement control message MeCM comprising an information element for measurement of said user equipment UE.

In a non-limitative embodiment, said step are performed at the call processing layer CALL_P.

The unit processor PR is therefore adequately configured to perform all the steps above-mentioned.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is to be understood that the present invention is not limited to the aforementioned embodiments and variations and modifications may be made without departing from the scope of the invention as is defined by the claims. In the respect, the following remarks are made.

The description and drawings merely illustrate the principles of the invention. It will thus be appreciated that those skilled in the art will be able to devise various arrangements that, although not explicitly described or shown herein, embody the principles of the invention and are included within its scope as is defined by the claims.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the Fig. 5, including any functional blocks labeled as "processors PR", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, application specific integrated circuit (ASIC), field programmable gate array (FPGA), read only memory (ROM) for storing software, and non volatile storage. Other hardware, conventional and/or custom, may also be included.

A person of skill in the art would readily recognize that steps of various above-described methods can be performed by programmed computers.

Herein, some embodiments are also intended to cover program storage devices, e.g., digital data storage media, which are machine or computer readable and encode machine-executable. The program storage devices are therefore non transitory media and may be, e.g., digital memories, magnetic storage media such as a magnetic disks and magnetic tapes, hard drives, or optically readable digital data storage media. The embodiments are also intended to cover computers programmed to perform said steps of the above-described method.

One or a plurality of computer program products PG as illustrated in Fig. 1 can be contained in the base station BS, said base station BS comprising a unit processor PR. A unit processor PR comprises one or a plurality of processors. The computer program products PG comprise a set of instructions.

Thus, said set of instructions contained, for example, in a system memory, may cause the base station BS to carry out the different steps of the method 100.

Any reference sign in the following claims should not be construed as limiting the claim. It will be obvious that the verb "to comprise" and its conjugations do not exclude the presence of any other steps or elements beside those defined in any claim. The word "a" or "an" preceding an element or step does not exclude the presence of a plurality of such elements or steps.

## Claims

1. Method (100) for performing mobility decision to trigger a handover by a radio access point (BS) of a radio network communication system (S) for a user equipment (UE) of said radio network communication system (S) served by said radio access point (BS), said method (100) being **characterized in that** said method comprising :

   - computing a normalized user equipment maximum transmit power PHn from a power headroom reported PHrp by said user equipment (UE);
   - computing a power headroom metric PHm which is equal to said normalized user equipment maximum transmit power PHn minus a power headroom required PHre by said user equipment (UE), said power headroom required PHre being the power required for the user equipment (UE) to sustain a guaranteed bit rate throughput ;
- comparing said power headroom metric PHm with a first threshold TH2 and with a first value HYS2 ;
- emitting a measurement report MEAS_RP when said power headroom metric PHm has remained inferior to said first threshold TH2 plus said first value HYS2 during the whole duration of a timer (T2), said timer being triggered when said power headroom metric (PHm) has become inferior to said first threshold TH2 minus said first value HYS2 ;
- based on said measurement report MEAS_RP, performing a decision for mobility to trigger a handover DES_MOB for said user equipment (UE).

2. Method (100) according to any of the preceding claims, wherein said method further comprises emitting a measurement report MEAS_RP when said power headroom metric PHm has remained superior to a second threshold TH1 minus a second value HYS1 during the whole duration of a timer (T1), said timer being triggered when said power headroom metric PHm has become superior to said second threshold TH1 plus said second value HYS1.

3. Method (100) according to any of the preceding claims, wherein said method further comprises a filtering of said computed power headroom metric PHm.

4. Method (100) according to the preceding claim, wherein said filtering is performed according to following equation :

$$F_n = (1 - a) \cdot F_{n-1} + a \cdot M_n$$

wherein:

- $a = 1/2^{(k/4)}$, where k is a filter coefficient FC,
- Mn is equal to said power headroom metric PHm computed from said radio modem layer (RM), and
- Fn is the updated filtered measurement result, which is sent within for measurement report MEAS_RP ;
- Fn-1 is the previous filtered measurement result.

5. Method (100) according to any of the previous claims, wherein said power headroom required PHre is defined by the following equation :

$$PHre = 10\log_{10}(N) + \Delta_{TF}$$

wherein:

- N is a number of physical resource blocks PRB granted to sustain a guaranteed bit rate GBR throughput, and
- $\Delta_{TF}$ is a predicted power control offset associated with a selected modulation coding scheme MCS.

6. Method (100) according to any of the previous claims, wherein said normalized user equipment maximum transmit power Phn is defined by the following equation :

$$PHn(UEk) = PHrp(UEk) + \Delta_{TF} + 10\log_{10}(M)$$

wherein:

- $\Delta_{TF}$ is a predicted power control offset associated with a selected modulation coding scheme MCS,
- M is the number said granted physical resource blocks PRB, and
- $PH_{rp}$ is the power headroom reported.

7. Method (100) according to any one of the previous claims, wherein a measurement report MEAS_RP is emitted when:

- an inequality entering condition (U2-1) corresponding to said power headroom metric PHm inferior to said first threshold TH2 minus said first value HYS2 is verified and an inequality leaving condition (U2-2) corresponding to said power headroom metric PHm superior to said first threshold TH2 plus said first value HYS2 is not verified during said timer (T2).

8. Method (100 according to any one of the previous claims, wherein the radio access point (BS) comprises a radio modem layer (RM) and a call processing layer (CALL_P) and wherein:

- the computation of the normalized user equipment maximum transmit power PHn, of the a power headroom metric PHm, the comparison of the power headroom metric PHm with a first threshold TH2 and with a first value HYS2 is performed at the radio modem layer (RM);
- the emitted measurement report MEAS_RP is transmitted from the radio modem layer (RM) to the call processing layer (CALL_P); and
- the decision for mobility to trigger a handover is performed by the call processing layer (CALL_P).

9. Radio access point (BS) of a radio network communication system (S) adapted for performing mobility decision to trigger a handover for a user equipment (UE) of said radio network communication system (S) served by said radio access point (BS), said radio access point (BS) being **characterized in that** said radio access point (BS) comprising a unit processor adapted to :

- compute a normalized user equipment maximum transmit power PHn from a power headroom reported PHrp by said user equipment (UE);
- compute a power headroom metric PHm which is equal to said normalized user equipment maximum transmit power PHn minus a power headroom required PHre by said user equipment (UE), said power headroom required PHre being the power required for the user equipment (UE) to sustain a guaranteed bit rate throughput ;
- compare said power headroom metric PHm with a first threshold TH2 and with a first value HYS2 ;
- emit a measurement report MEAS_RP when said power headroom metric PHm has remained inferior to said first threshold TH2 plus said first value HYS2 during the whole duration of a timer (T2), trigger said timer when said power headroom metric PHm has become inferior to said first threshold TH2 minus said first value HYS2 ;
- based on said measurement report MEAS_RP, perform a decision for mobility to trigger a handover DES_MOB for said user equipment (UE).

10. Radio network communication system (S) adapted for performing mobility decision to trigger a handover by a radio access point (BS) of said radio network communication system (S) for a user equipment (UE) of said radio network communication system (S) served by said radio access point (BS), said radio network communication system (S) comprising :

- at least one radio access point (BS) according to the preceding claim 9 ; and
- at least one user equipment (UE) adapted to transmit to said radio access point (BS) a power headroom reported PHrp.

11. Computing program product (PG) for a computer, comprising a set of instructions, which is **characterized in that** when it loaded into said computer, causes the computer to carry out the method for performing a mobility decision to trigger a handover as claimed in any one of claims 1 to 8.

**Patentansprüche**

1. Verfahren (100) zur Durchführung einer Mobilitätsentscheidung, um einen Handover durch einen Funkzugangspunkt (BS) eines Funknetzwerk-Kommunikationssystems (S) für ein Benutzerendgerät (UE) des besagten Funknetzwerk-Kommunikationssystem (S), welches von dem besagten Funkzugangspunkt (BS) bedient wird, auszulösen, wobei das besagte Verfahren (100) **dadurch gekennzeichnet ist, dass** das besagte Verfahren umfasst:

- Berechnen einer normalisierten maximalen Sendeleistung PHn des Benutzerendgeräts ausgehend von einer von dem besagten Benutzerendgerät (UE) berichteten Leistungsaussteuerungsreserve PHrp;
- Berechnen einer Leistungsaussteuerungsreserve-Metrik PHm, welche gleich der besagten normalisierten maximalen Sendeleistung PHn des Benutzerendgeräts abzüglich einer von dem besagten Benutzerendgerät (UE) geforderten Leistungsaussteuerungsreserve PHre ist, wobei die besagte geforderte Leistungsaussteuerungsreserve PHre diejenige Leistung ist, die für das Benutzerendgerät (UE) erforderlich ist, um einen garantierten Bitratendurchsatz aufrechtzuerhalten;

- Vergleichen der besagten Leistungsaussteuerungsreserve-Metrik PHm mit einem ersten Grenzwert TH2 und mit einem ersten Wert HYS2;

- Ausgeben eines Messberichts MEAS_RP, wenn die besagte Leistungsaussteuerungsreserve-Metrik PHm während der gesamten Dauer eines Timers (T2) unterhalb des besagten ersten Grenzwert TH2 zuzüglich des besagten ersten Wertes HYS2 geblieben ist, wobei der besagte Timer ausgelöst wird, sobald die besagte Leistungsaussteuerungsreserve-Metrik PHm unter den besagten ersten Grenzwert TH2 abzüglich des besagten ersten Wertes HYS2 absinkt;

- basierend auf dem besagten Messbericht MEAS_RP, Durchführen einer Entscheidung für die Mobilität, um einen Handover DES-MOB für das besagte Benutzerendgerät (UE) auszulösen.

2. Verfahren (100) nach einem beliebigen der vorstehenden Ansprüche, wobei das besagte Verfahren weiterhin das Ausgeben eines Messberichts MEAS_RP umfasst, wenn die besagte Leistungsaussteuerungsreserve-Metrik PHm während der gesamten Dauer eines Timers (T1) oberhalb eines zweiten Grenzwerts TH1 abzüglich eines zweiten Wertes HYS1 geblieben ist, wobei der besagte Timer ausgelöst wird, sobald die besagte Leistungsaussteuerungsreserve-Metrik PHm über den besagten zweiten Grenzwert TH1 zuzüglich des besagten zweiten Wertes HYS1 hinaus ansteigt.

3. Verfahren (100) nach einem beliebigen der vorstehenden Ansprüche, wobei das besagte Verfahren weiterhin ein Filtern der besagten berechneten Leistungsaussteuerungsreserve-Metrik PHm umfasst.

4. Verfahren (100) nach dem vorstehenden Anspruch, wobei das besagte Filtern gemäß der nachfolgenden Gleichung durchgeführt wird:

$$F_n = (1 - \alpha) \cdot F_{n-1} + \alpha \cdot M_n$$

wobei:

- $\alpha = 1/2^{(k/4)}$, wobei k ein Filterkoeffizient FC ist,
- $M_n$ gleich der aus der besagten Funkmodemschicht (RM) berechneten Leistungsaussteuerungsreserve-Metrik PHm ist, und
- $F_n$ das aktualisierte gefilterte Messergebnis ist, welches für den Messbericht MEAS_RP gesendet wird;
- $F_{n-1}$ das vorherige gefilterte Messergebnis ist.

5. Verfahren (100) nach einem beliebigen der vorstehenden Ansprüche, wobei die besagte geforderte Leistungsaussteuerungsreserve PHre durch die folgende Gleichung definiert wird:

$$PHre = 10\log_{10}(N) + \Delta_{TF}$$

wobei:

- N eine Anzahl von physischen Ressourcenblöcken PRB ist, die für das Aufrechterhalten eines garantierten Bitraten- bzw. GBR-Durchsatzes zugesprochen werden, und
- $\Delta_{TF}$ ein mit einem ausgewählten Modulationscodierschema MSC assoziierter prognostizierter Leistungsregelungsversatz ist.

6. Verfahren (100) nach einem beliebigen der vorstehenden Ansprüche, wobei die besagte normalisierte maximale Sendeleistung Phn des Benutzerendgeräts durch die folgende Gleichung definiert wird:

$$PHn(UEk) = PHrp(UEk) + \Delta_{TF} + 10\log_{10}(M)$$

wobei:

- $\Delta_{TF}$ ein mit einem ausgewählten Modulationscodierschema MSC assoziierter prognostizierter Leistungsregelungsversatz ist,
- M die Anzahl der besagten zugesprochenen physischen Ressourcenblöcke PRB ist, und
- PHrp die berichtete Leistungsaussteuerungsreserve ist.

7. Verfahren (100) nach einem beliebigen der vorstehenden Ansprüche, wobei ein Messbericht MEAS_RP ausgegeben wird, wenn:

- Ein Auftreten einer Ungleichheitsbedingung (U2-1), welches der besagten unter dem besagten ersten Grenzwert TH2 abzüglich des besagten ersten Wertes HYS2 liegenden Leistungsaussteuerungs-Metrik PHm entspricht, und kein Verlassen der Ungleichheitsbedingung (U2-2), welches der besagten über dem besagten ersten Grenzwert TH2 zuzüglich des besagten ersten Wertes HYS2 liegenden Leistungsaussteuerungs-Metrik PHm entspricht, während der Dauer des besagten Timers (T2) festgestellt wird.

8. Verfahren (100) nach einem beliebigen der vorstehenden Ansprüche, wobei der Funkzugangspunkt (BS) eine Funkmodemschicht (RM) und eine Anrufverarbeitungsschicht (CALL_P) umfasst, und wobei:

- Das Berechnen der normalisierten maximalen Sendeleistung PHn des Benutzerendgeräts, der Leistungsaussteuerungs-Metrik PHm und das Vergleichen der Leistungsaussteuerungs-Metrik PHm mit einem ersten Grenzwert TH2 und einem ersten Wert HYS2 an der Funkmodemschicht (RM) durchgeführt wird;
- der ausgegebene Messbericht MEAS_TP von der Funkmodemschicht (RM) an die Anrufverarbeitungsschicht (CALL_P) übertragen wird; und
- die Entscheidung für die Mobilität, um einen Handover auszulösen, durch die Anrufverarbeitungsschicht (CALL_P) durchgeführt wird.

9. Funkzugangspunkt (BS) eines Funknetzwerk-Kommunikationssystems (S), ausgelegt für das Durchführen einer Mobilitätsentscheidung, um einen Handover für ein Benutzerendgerät (UE) des besagten Funknetzwerk-Kommunikationssystem (S), welches von dem besagten Funkzugangspunkt (BS) bedient wird, auszulösen, wobei der besagte Funkzugangspunkt (BS) dadurch charakterisiert ist, dass der besagte Funkzugangspunkt (BS) eine Prozessoreinheit umfasst, welche für das Durchführen der folgenden Schritte ausgelegt ist:

- Berechnen einer normalisierten maximalen Sendeleistung PHn des Benutzerendgeräts ausgehend von einer von dem besagten Benutzerendgerät (UE) berichteten Leistungsaussteuerungsreserve PHrp;
- Berechnen einer Leistungsaussteuerungsreserve-Metrik PHm, welche gleich der besagten normalisierten maximalen Sendeleistung PHn des Benutzerendgeräts abzüglich einer von dem besagten Benutzerendgerät (UE) geforderten Leistungsaussteuerungsreserve PHre ist, wobei die besagte geforderte Leistungsaussteuerungsreserve PHre diejenige Leistung ist, die für das Benutzerendgerät (UE) erforderlich ist, um einen garantierten Bitratendurchsatz aufrechtzuerhalten;
- Vergleichen der besagten Leistungsaussteuerungsreserve-Metrik PHm mit einem ersten Grenzwert TH2 und mit einem ersten Wert HYS2;
- Ausgeben eines Messberichts MEAS_RP, wenn die besagte Leistungsaussteuerungsreserve-Metrik PHm während der gesamten Dauer eines Timers (T2) unterhalb des besagten ersten Grenzwert TH2 zuzüglich des besagten ersten Wertes HYS2 geblieben ist, und Auslösen des besagten Timers, sobald die besagte Leistungsaussteuerungsreserve-Metrik PHm unter den besagten ersten Grenzwert TH2 abzüglich des besagten ersten Wertes HYS2 absinkt;
- basierend auf dem besagten Messbericht MEAS_RP, Durchführen einer Entscheidung für die Mobilität, um einen Handover DES-MOB für das besagte Benutzerendgerät (UE) auszulösen.

10. Funknetzwerk-Kommunikationssystem (S), ausgelegt für das Durchführen einer Mobilitätsentscheidung, um einen Handover auszulösen, durch einen Funkzugangspunkt (BS) des besagten Funknetzwerk-Kommunikationssystem (S) für ein Benutzerendgerät (UE) des besagten Funknetzwerk-Kommunikationssystems (S), welches von dem besagten Funkzugangspunkt (BS) bedient wird, wobei das besagte Funknetzwerk-Kommunikationssystem (S) umfasst:

- Mindestens einen Funkzugangspunkt (BS) gemäß dem vorstehenden Anspruch 9; und
- mindestens ein Benutzerendgerät (UE), welches für die Übertragung einer berichteten Leistungsaussteuerungsreserve PHrp an den besagten Funkzugangspunkt (BS) ausgelegt ist.

11. Rechenprogramm-Produkt (PG) für einen Computer, umfassend einen Satz von Befehlen, **dadurch gekennzeichnet, dass** es, wenn es auf dem besagten Computer geladen ist, bewirkt, dass der Computer das Verfahren zur Durchführung einer Mobilitätsentscheidung, um einen Handover auszulösen, gemäß einem beliebigen der Ansprüche 1 bis 8 ausführt.

**Revendications**

1. Procédé (100) d'exécution d'une décision de mobilité pour déclencher un transfert par un point d'accès radio (BS) d'un système de communication par réseau radio (S) pour un équipement utilisateur (UE) dudit système de communication par réseau radio (S) desservi par ledit point d'accès radio (BS), ledit procédé (100) étant **caractérisé en ce qu'**il comprend les étapes suivantes

   - calculer une puissance de transmission maximum d'équipement utilisateur normalisée PHn à partir d'une marge de puissance rapportée PHrp par ledit équipement utilisateur (UE) ;
   - calculer une mesure de marge de puissance PHm qui est égale à ladite puissance de transmission maximum d'équipement utilisateur normalisée PHn moins une marge de puissance requise PHre par ledit équipement utilisateur (UE), ladite marge de puissance requise PHre étant la puissance requise par l'équipement utilisateur (UE) pour maintenir une capacité de débit binaire garanti ;
   - comparer ladite mesure de marge de puissance PHm à un premier seuil TH2 et à une première valeur HYS2 ;
   - transmettre un rapport de mesure MEAS_RP lorsque ladite mesure de marge de puissance PHm est restée inférieure audit premier seuil TH2 plus ladite première valeur HYS2 durant toute la durée d'une temporisation (T2), ladite temporisation étant déclenché lorsque ladite mesure de marge de puissance (PHm) devient inférieure audit premier seuil TH2 moins ladite première valeur HYS2 ;
   - sur la base dudit rapport de mesure MEAS_RP, exécuter une décision de mobilité pour déclencher un transfert DES_MOB pour ledit équipement utilisateur (UE).

2. Procédé (100) selon l'une quelconque des revendications précédentes, dans lequel ledit procédé comprend en outre la transmission d'un rapport de mesure MEAS_RP lorsque ladite mesure de marge de puissance PHm est restée supérieure à un deuxième seuil TH1 moins une deuxième valeur HYS1 durant toute la durée d'une temporisation (T1), ladite temporisation étant déclenchée lorsque ladite mesure de marge de puissance PHm devient supérieure audit deuxième seuil TH1 plus ladite deuxième valeur HYS1.

3. Procédé (100) selon l'une quelconque des revendications précédentes, dans lequel ledit procédé comprend en outre un filtrage de ladite mesure de marge de puissance calculée PHm.

4. Procédé (100) selon la revendication précédente, dans lequel ledit filtrage est exécuté selon l'équation suivante

$$F_n = (1\text{-}a) \cdot F_{n\text{-}1} + a \cdot M_n$$

dans laquelle:

   - $a = 1/2^{(k/4)}$, où k est un coefficient de filtre FC,
   - $M_n$ est égal à ladite mesure de marge de puissance PHm calculée à partir de ladite couche de modem radio (RM), et
   - $F_n$ est le résultat de mesure filtré mis à jour, qui est envoyé à l'intérieur pour un rapport de mesure MEAS_RP ;
   - $F_{n\text{-}1}$ est le résultat de mesure filtré précédent.

5. Procédé (100) selon l'une quelconque des revendications précédentes, dans lequel ladite marge de puissance requise PHre est définie par l'équation suivante

$$Phre = 10\log_{10}(N) + \Delta_{TF}$$

dans laquelle :

- N est le nombre de blocs de ressources physiques PRB accordés pour maintenir une capacité de débit binaire garanti GBR, et
- $\Delta_{TF}$ est un décalage de commande de puissance prévu associé à un schéma de codage de modulation MCS sélectionné.

6. Procédé (100) selon l'une quelconque des revendications précédentes, dans lequel ladite puissance de transmission maximum d'équipement utilisateur normalisée PHn est définie par l'équation suivante :

$$PHn(UEk) = PHrp(UEk) + \Delta_{TF} + 10\log_{10}(M)$$

dans laquelle:

- $\Delta_{TF}$ est un décalage de commande de puissance prévu associé à un schéma de codage de modulation MCS sélectionné.
- M est le nombre desdits blocs de ressources physiques PRB accordés, et
- $PH_{rp}$ est la marge de puissance rapportée.

7. Procédé (100) selon l'une quelconque des revendications précédentes, dans lequel un rapport de mesure MEAS_RP est transmis quand :

- une condition d'entrée d'inégalité (U2-1) correspondant à ladite mesure de marge de puissance PHm inférieure audit premier seuil TH2 moins ladite première valeur HYS2 est vérifiée et une condition de sortie d'inégalité (U2-2) correspondant à ladite mesure de marge de puissance PHm supérieure audit premier seuil TH2 plus ladite première valeur HYS2 n'est pas vérifiée durant ladite temporisation (T2).

8. Procédé (100) selon l'une quelconque des revendications précédentes, dans lequel le point d'accès radio (BS) comprend une couche de modem radio (RM) et une couche de traitement d'appel (CALL_P) est dans lequel :

- le calcul de la puissance de transmission maximum d'équipement utilisateur normalisée PHn, de la mesure de marge de puissance PHm, la comparaison de la mesure de marge de puissance PHm avec un premier seuil TH2 et avec une première valeur HYS2 est réalisée au niveau de la couche de modem radio (RM) ;
- le rapport de mesure transmis MEAS_RP est transmis à partir de la couche de modem radio (RM) vers la couche de traitement d'appel (CALL_P) ; et
- la décision de mobilité pour déclencher un transfert est exécutée par la couche de traitement d'appel (CALL_P).

9. Point d'accès radio (BS) d'un système de communication par réseau radio (S) adapté pour exécuter une décision de mobilité pour déclencher un transfert pour un équipement utilisateur (UE) dudit système de communication par réseau radio (S) desservi par ledit point d'accès radio (BS), ledit point d'accès radio (BS) étant **caractérisé en ce que** ledit point d'accès radio (BS) comprend un processeur d'unité adapté pour

- calculer une puissance de transmission maximum d'équipement utilisateur normalisée PHn à partir d'une marge de puissance rapportée PHrp par ledit équipement utilisateur (UE) ;
- calculer une mesure de marge de puissance PHm qui est égale à ladite puissance de transmission maximum d'équipement utilisateur normalisée PHn moins une marge de puissance requise PHre par ledit équipement utilisateur (UE), ladite marge de puissance requise PHre étant la puissance requise par l'équipement utilisateur (UE) pour maintenir une capacité de débit binaire garanti ;
- comparer ladite mesure de marge de puissance PHm à un premier seuil TH2 et à une première valeur HYS2 ;
- transmettre un rapport de mesure MEAS_RP lorsque ladite mesure de marge de puissance PHm est restée inférieure audit premier seuil TH2 plus ladite première valeur HYS2 durant toute la durée d'une temporisation (T2), déclencher ladite temporisation lorsque ladite mesure de marge de puissance PHm devient inférieure audit premier seuil TH2 moins ladite première valeur HYS2 ;
- sur la base dudit rapport de mesure MEAS_RP, exécuter une décision de mobilité pour déclencher un transfert DES_MOB pour ledit équipement utilisateur (UE).

**10.** Système de communication par réseau radio (S) adapté pour exécuter une décision de mobilité pour déclencher un transfert par un point d'accès radio (BS) dudit système de communication par réseau radio (S) pour un équipement utilisateur (UE) dudit système de communication par réseau radio (S) desservi par ledit point d'accès radio (BS), ledit système de communication par réseau radio (S) comprenant

- au moins un point d'accès radio (BS) selon la revendication précédente 9 ; et
- au moins un équipement utilisateur (UE) adapté pour transmettre audit point d'accès radio (BS) une marge de puissance rapportée PHrp.

**11.** Produit de programme informatique (PG) pour un ordinateur, comprenant un ensemble d'instructions qui sont **caractérisées en ce qu'**elles entraînent, lorsqu'elles sont chargées dans ledit ordinateur, l'exécution par l'ordinateur du procédé d'exécution d'une décision de mobilité pour dédencher un transfert selon l'une quelconque des revendications 1 à 8.

**FIG. 1**

**FIG. 2**

**FIG. 3**

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009123512 A

- WO 2010121418 A